# EUROPÄISCHE PATENTSCHRIFT

(11) **EP 1 542 885 B1**
(45) Veröffentlichungstag und Bekanntmachung des Hinweises auf die Patenterteilung: **12.03.2008**
(21) Anmeldenummer: 03756441.6
(22) Anmeldetag: 22.09.2003
(51) Int. Cl.: B60R 16/02, H02J 1/00

(54) **SICHERUNG FÜR BORDNETZ EINES KRAFTFAHRZEUGES**
FUSE FOR THE ELECTRIC SYSTEM OF A MOTOR VEHICLE
ELEMENT DE SECURITE POUR RESEAU DE BORD DE VEHICULE AUTOMOBILE

(30) Priorität: 20.09.2002 DE 10243970
(43) Veröffentlichungstag der Anmeldung: 22.06.2005
(73) Patentinhaber: Intedis GmbH & Co. KG, 97084 Würzburg (DE)
(72) Erfinder: LEIBER, Heinz, 71739 Oberriexingen (DE)
(74) Vertreter: von den Steinen, Axel
(86) Internationale Anmeldenummer: PCT/DE2003/003155
(87) Internationale Veröffentlichungsnummer: WO 2004/028862

(56) Entgegenhaltungen:
- EP-A- 0 800 254
- WO-A-02/051668
- US-A- 4 942 571
- US-A- 6 157 091

## Beschreibung

Die Erfindung betrifft ein Kraftfahrzeug mit einem elektrischen Bordnetz nach dem Oberbegriff des Anspruchs 1.

Die Sicherungskästen in Kraftfahrzeugen nehmen viel Raum in Anspruch. Die Anzahl der Sicherungen, verteilt auf mehrere Sicherungskästen, beträgt im Mittel über 50. Bei Ausfall einer Sicherung tut sich der Fahrer schwer, diese auszuwechseln ohne umfangreiches Studium der Bedienungsanleitung. Ideal wäre ein Stromverteiler ohne auswechselbare Sicherungen.

Diese Sicherungskästen haben eine starke Bündelung der Anzahl der Sicherungen mit vielen Leitungen zu den Verbrauchern zur Folge. Oft ist die Leitung zum Verbraucher infolge der Lage des Sicherungskastens sehr lang.

Die Verlegung des dicken Kabelstranges und deren Befestigung ist aufwendig und erfordert zum Teil große Durchbrüche in den Karosserietrennwänden.

Ein Ruhestrommanagement ist mit heutigen Sicherungskästen nicht oder nur teilweise möglich, da die Sicherung nicht weiß, welcher Strom im Verbrauchsstrang fließt.

Ein weiterer Mangel der heutigen Sicherungskästen, die die Stromverteilung und Absicherung der Leitungen übernehmen, ist die Absicherung nur nach absolutem Kurzschluss. Ein Teilkurzschluss, der oft zu Schwelbränden führt, wird nicht erfasst.

Ein gattungsgemäßes Kraftfahrzeug, bei dem im elektrischen Bordnetz sogenannte "intelligente" Sicherungselemente vorgesehen sind, ist beispielsweise aus der DE 100 09 775 A1 bekannt. Zum Schutz der Leitung vor Überströmen wird bei diesem Sicherungselement der in der Leitung fließende Strom oder dessen Richtung mit einem Messglied gemessen und anschließend in einer Auswerteeinrichtung ausgewertet. In Abhängigkeit des Auswerteergebnisses kann ein Trennelement zur Unterbrechung der Leitung betätigt werden. Derartige Sicherungselemente sind dazu geeignet, die bisher üblichen Schmelzsicherungen zu ersetzen und eine intelligente Sicherungscharakteristik zu realisieren.

Aus der WO02/051668 A ist eine Sicherungsbox mit intelligenten Sicherungselementen zur Verwendung in einem Multiplex-Stromverteilersystem eines Kraftfahrzeuges bekannt.

Aufgabe der vorliegenden Erfindung ist es, ausgehend von diesem Stand der Technik neue Ausführungsformen von Kraftfahrzeugen vorzuschlagen, bei denen vorzugsweise im gesamten elektrischen Bordnetz intelligente Sicherungselemente vorgesehen sind.

Diese Aufgabe wird durch die Kraftfahrzeuge gemäß der Lehre der beiden unabhängigen Hauptansprüche gelöst.

Vorteilhafte Ausführungsformen der Erfindung sind Gegenstand der Unteransprüche.

Die Erfindung beruht zum einen auf dem Grundgedanken, dass bei der Auswertung des gemessenen Stromverlaufes immer der zeitliche Stromverlauf in einem bestimmten Zeitintervall Δt berücksichtigt wird. Durch geeignete Auswertung, beispielsweise durch Mustervergleich mit bekannten Stromverlaufsmustern, die beispielsweise einen Kurzschlussstrom, das Anlaufverhalten eines Antriebsmotors oder das Ansprechverhalten eines Polyswitches charakterisieren, kann der über die Zeit aufgenommene Stromverlauf klassifiziert und als kritischer bzw. als unkritischer Belastungszustand erkannt werden.

Weiterhin kann im Vergleich zur Schmelzsicherung die mögliche Strombelastung der Leitung viel exakter nachgebildet werden, so dass in verzweigten Strompfaden eine Leitungsoptimierung erreicht werden kann, wodurch sich erheblich Gewicht einsparen lässt.

Bevorzugt ist vorgesehen, dass intelligente Sicherungselemente zur Absicherung von Leitungen verwendet werden, die hinter dem Sicherungselement in mehrere Teilleitungen zur Versorgung verschiedener Verbraucher verzweigen. Prinzipieller Ansatzpunkt ist es dabei, dass die Information über den Betriebszustand der Verbraucher, beispielsweise ob eine Lampe eingeschaltet ist oder nicht, an das Sicherungselement zurückgemeldet werden. Bei der Auswertung des in der Hauptleitung gemessenen Stromverlaufs wird die Information über den Betriebszustand der an den Teilleitungen angeschlossenen Verbraucher berücksichtigt. Auf diese Weise ist es möglich, die Charakteristik des Sicherungselements, beispielsweise bei welcher Schwelle der Belastung das Sicherungselement das Trennelement auslöst und die Leitung unterbricht, in Abhängigkeit des Betriebszustandes der an die Teilleitung angeschlossenen Verbraucher zu ändern. Verzweigt die Leitung beispielsweise in vier Teilleitungen, an denen jeweils ein Leuchtmittel mit einer bestimmten Leistungsaufnahme angeschlossen ist, so kann bei der Messung der Stromlast in der Hauptleitung berücksichtigt werden, welche der vier Leuchtmittel aktuell eingeschaltet sind. Die Auslöseschwelle zur Auslösung des Trennelements wird dann in Abhängigkeit von der Anzahl der eingeschalteten Leuchtmittel angepasst. Im Ergebnis ermöglicht diese intelligente Absicherung der Hauptleitung unter Berücksichtigung der in den Teilleitungen angeschlossenen Verbraucher, dass die Anzahl der notwendigen Sicherungselemente verringert werden kann.

Anhand der Zeichnung wird ein Ausführungsbeispiel der Erfindung näher erläutert.

Es zeigen:
- **Fig. 1**: eine Möglichkeit des Aufbaus der Kraftfahrzeugelektronik gemäß der Erfindung;
- **Fig. 2**: den herausgezeichneten Aufbau eines Verzögerungsstranges;
- **Fig. 3**: Diagramme zur Erläuterung der Erfindung;
- **Fig. 4**: eine weitere Möglichkeit zum Aufbau der Kraftfahrzeugelektronik gemäß der Erfindung.

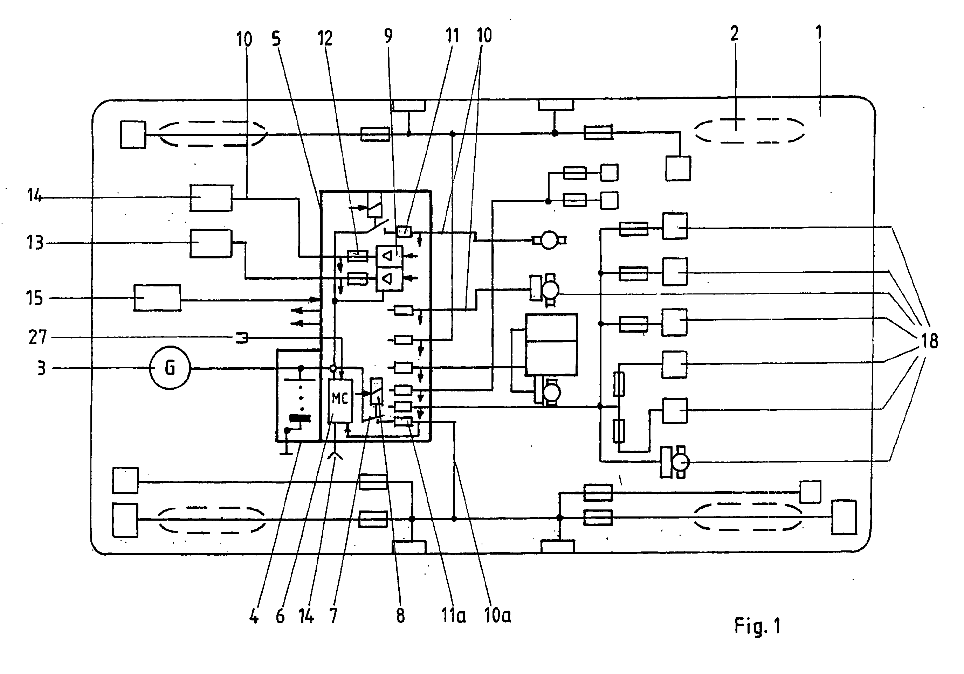

In **Fig. 1** ist schematisch der Umriss eines Kraftfahrzeuges mit seinen Rädern dargestellt. Das Fahrzeug 1 weist einen Generator 3 und eine Batterie 4 zur Versorgung seiner elektrischen Verbraucher auf. Der Versorgungsstrom wird einem Stromverteiler 5 zugeführt, der als intelligenter Stromverteiler ausgebildet ist.

Dieser enthält eine Auswerteeinrichtung, z.B. in Form eines Mikrocomputers 6 (MC). Der Versorgungsstrom wird über die Kontakte 7 von z.B. Relais 8 und über Halbleiterschalter 9 einer Vielzahl von Versorgungsleitungen 10 zugeführt, an denen ein oder mehrere Verbraucher angeschaltet sind. In **Fig. 1** ist der Einfachheit halber nur der Kontakt 7 für den Versorgungsstrang 10a dargestellt, an den ein Strommessglied, z.B. ein Shunt 11a, angeschaltet ist. Die an diesem abfallende Schaltung wird mit Hilfe des so gebildeten Shunts vom Mikrocomputer 6 gemessen und verarbeitet. Den übrigen Versorgungsleitungen 10 sind ebenfalls nicht gezeichnete Trennelemente, z.B. Relais und Wiederstände 11 oder regenerierbare Sicherungen 12, zugeordnet. Die durch diese fließenden Ströme werden z.B. mittels der Shunts 11 bzw. 12 ermittelt und dem Mikrocomputer 6 zugeführt, was durch die kleinen Pfeile an den Widerstandsausgängen angedeutet ist. Relais und Shunt können auch durch Halbleiterschaltungen mit Strommessglied ersetzt werden.

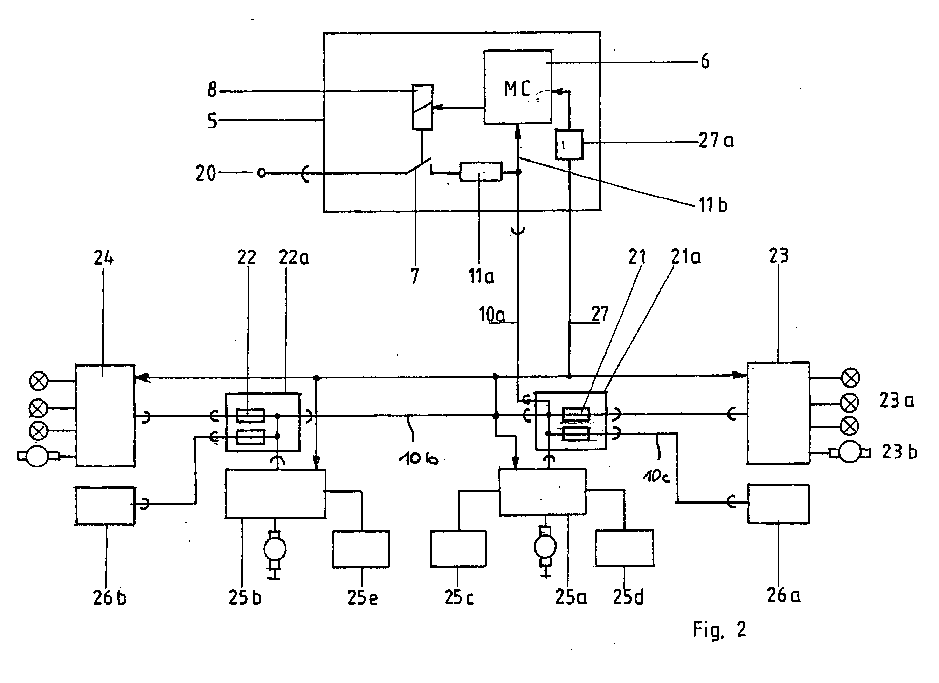

Die Anordnung nur für den Versorgungsstrang 10a ist in **Fig. 2** herausgezeichnet. Man erkennt den Batterieanschluss 20, den Mikrocomputer 6, das Relais 8 mit seinem Kontakt 7, den Widerstand 11a und die Rückführung 11b zum MC 6. Der Versorgungsstrang 10a versorgt die linke Fahrzeugseite. An ihm sind angeschlossen, und zwar über regenerierbare Sicherungen 21 bzw. 22 (z.B. Polyswitches PTC) ein Steuergerät 23 vorn links, das Lampen 23a und einen Motor 23b für die Scheinwerfereinstellung versorgt, ein Steuergerät 24 hinten links, das entsprechende Lampen und einen Elektromotor oder andere Verbraucher versorgt, sowie die Blöcke 26a und 26b, die auch Steuergeräte oder sonstige Verbraucher sind.

Direkt werden vom Versorgungsstrang 10a die Türsteuergeräte 25a und 25b versorgt, die ihrerseits den Außenspiegel 25c und die Türschlösser 25d und 25e, sogenannte E-Schlösser, versorgen.

Die Steuergeräte 23, 24, 25a und 25b sind über eine Busverbindung 27 und einen Canreceiver 27a mit dem Mikrocomputer 6 verbunden. Über diese Busverbindung wird dem Mikrocomputer 6 mitgeteilt, welche Verbraucher eingeschalten sind, so dass er überhaupt prüfen kann, ob der durch den Shunt 11 a fließende Strom plausibel ist oder nicht.

Die PTC 21/22 sind vorteilhaft in einem Verteilerkasten 21a bzw. 22a angeordnet und direkt in den Kabelbaum integriert. Fallweise kann dies auch über Steckverbinder oder auch über z.B. mittels Schneidklemmtechnik angeschlossene Kabel erfolgen.

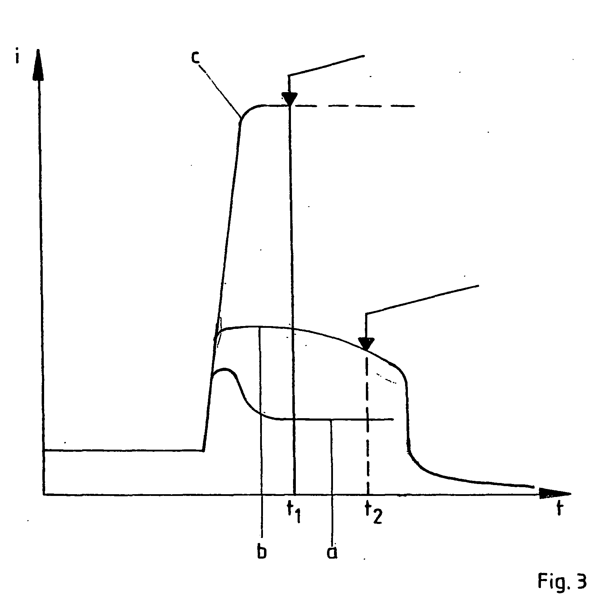

**Fig. 3** zeigt die Stromverläufe bei verschiedenen Situationen. Die Kurve a zeigt die Stromänderung, wenn eine zusätzliche Lampe oder ein Motor eingeschalten wird. Es erfolgt keine Abschaltung. Es kommt auch nicht zur Abschaltung, wenn ein Verlauf entsprechend Kurve b erkannt wird, der bei einem Kurzschluss in einem Kreis mit einer regenerierbaren Sicherung, z.B. PTC, zu Stande kommt. Dieser Kreis wird hier durch die Sicherung abgeschaltet. Im Falle der Kurve c wird vom Mikrocomputer 6 ein Kurzschluss erkannt und der entsprechende Strang wird durch das entsprechende Relais bei t=1 abgeschaltet. Die Kurvenverläufe sind nur qualitativ dargestellt.

Auftretende Kurzschlüsse werden in einem Diagnosespeicher direkt im Mikrocomputer oder in einem zentralen Diagnosespeicher abgespeichert und dienen dem Service als wertvolle Information bei der Fehlersuche. Ein kritischer Kurzschluss wie z.B. im Falle der **Fig. 3c,** bei der ein Leitungsstrang abgeschalten wird, wird sinnvollerweise über die Busverbindung in einem der Displays des Fahrzeuges angezeigt. Da oft sporadisch Kurzschlüsse auftreten, bietet sich an, nach einer Erholungspause oder bei jedem Fahrzeugstart den Leitungsstrang wieder einzuschalten. Durch den typisch abfallenden Strom kann bereits bei t=2 ein Kurzschluss erkannt und abgespeichert werden.

In **Fig. 1** sind neben dem Versorgungsstrang 10a eine Reihe weiterer Versorgungsleitungen 10 mit nicht gezeichneten Relais für die verschiedensten Verbraucher 18 vorgesehen. Außerdem sind zwei Versorgungskreise 10 mit Halbleiterschaltern 9 vorgesehen, die einem Sicherheitssystem 14 (z.B. Airbag) und einem Diebstahlsicherungssystem 13 zugeordnet sind, die nur geringe Ströme benötigen.

Es können auch Verbraucher ohne zwischengeschaltete Trennelemente über PTC angeschlossen sein. In diesem Fall ist es vorteilhaft, zusätzlich ein nicht gezeichnetes Strommessglied in die Versorgungsleitung von der Batterie zum Stromverteiler 5 einzuschalten und einen internen Stromverteiler vorzusehen. Dieses Strommessglied kann auch grundsätzlich zusätzlich eingesetzt werden, z.B. als Redundanz zu den Strommessgliedern zu den Leitungsleitungen.

Mögliche Versorgungsstrangaufteilungen sind in der folgenden Tabelle aufgelistet:

Kreis
1: rechte Fahrzeugseite
2: linke Fahrzeugseite
3: Cockpit
4: Dach
5: Motorsteuerung
6: Fahrdynamik System (EHB, ESP, ABS)
7: elektrische Lenkung
8: Diebstahlsystem
9: Airbag & Sicherheitssysteme
10: Telematik

Es ist auch eine HF-Antenne mit dem Mikrocomputer 6 verbunden, so dass die Signale einer Fernbedienung direkt dem Stromverteiler 5 zugeleitet werden. Dies ist besonders wichtig bei sogenannten Keyless-Go-Systemen, die sehr kurze Reaktionszeiten in der Signalkommunikation brauchen, bei der das Aufwecken eines Netzwerkes nach Betätigung des Türgriffes kritisch ist. In diesem Fall können die zeitkritischen Wecksignale, z.B. vom Türgriff (Anschluss 27), direkt dem Mikrocomputer 6 des Stromverteilers 5 zugeführt werden. Die **Fig. 1** zeigt, dass die selbstheilenden Sicherungen 12 vorzugsweise in Verzweigungen der Versorgungsleitungen 10 integriert sind. Wie schon erwähnt, sind zumindest dann, wenn Ruhestromverbraucher angeschlossen sind, die Relais bistabil ausgebildet.

Bei diesem Konzept bietet sich an, ein Ruhestrommanagement zu integrieren, welches auch im Mikrocomputer 6 vom Ladezustand der Batterie (SOC) gesteuert wird. Da der gesamte Strom im Bordnetz überwacht wird, kann besonders einfach eine Batterieüberwachung nach sog. SOC, SOH realisiert werden. Damit kann das Liegenbleiben durch leere Batterien merklich reduziert werden.

Die **Fig. 1** bzw. die obige Tabelle zeigt, dass die Zahl der Versorgungsleitungen relativ klein gehalten ist. Im Mikrocomputer 6 wird der zeitliche Verlauf der Ströme in den Versorgungsträgern 10 überwacht. Abgeschaltet wird, wenn ein typischer Kurzschlussstrom erkannt wird. Bei der Bestimmung der Höhe des Kurzschlussstroms wird die Anzahl der eingeschalteten Verbraucher, deren Zahl von den Steuergeräten rückgemeldet wird, berücksichtigt. Wird eine Abschaltung wegen eines unplausiblen Stroms vorgenommen, so wird dies einem Diagnosespeicher gemeldet.

Es kann davon ausgegangen werden, dass die Ausgänge der Steuergeräte kurzschlusssicher sind. Die Halbleiterschalter 9 wurden im Falle kleiner Ströme eingesetzt.

Die Einschaltung der Verbraucherleitungen kann vom Zustand des Fahrzeugs (über den Block 15), z.B. bei Fahrzeug offen bzw. geschlossen, oder von der Benutzung abhängig sein. So wird man vorzugsweise bei Öffnung der Fahrzeugtür oder bei Benutzung der Fernbedienung für die Türöffnung über die Antenne 14 zunächst nur die Zugangsberechtigungssysteme, z.B. die Zentralverriegelung usw., betätigen.

Zur vollkommenen SOC-Überwachung ist nicht nur die Messung des gesamten Verbrauchsstroms, sondern auch die Messung des vom Generator gelieferten Stroms notwendig. Hierbei kann das nicht gezeichnete Strommesselement im Generatorregler integriert werden. Der Strommesswert kann über ein Bussystem dem Stromregler mitgeteilt werden. Auch hier kann der Mikrocomputer 6 die SOC Berechnung übernehmen. Über das Bussystem wird ein kritischer Batteriezustand z.B. einem Kombiinstrument gemeldet.

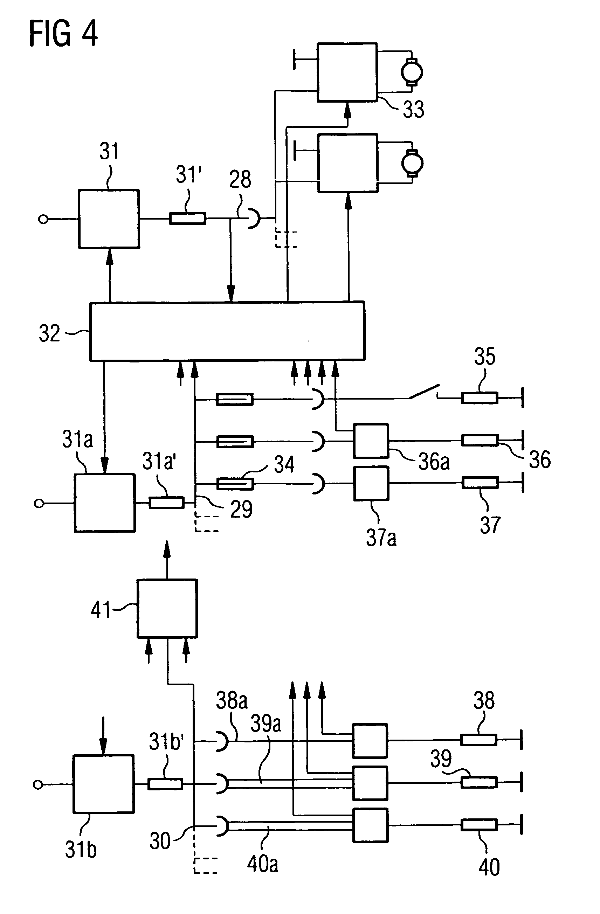

**Fig. 4** zeigt eine weitere Ausführungsform einer Schaltung mit verschiedenen Leitungen 28, 29 und 30, bei denen Trennelemente 31, 31a und 31b sowie Strommessglieder 31', 31'a und 31'b vorgesehen sind. Die Auswertung der Ströme in den Leitungen erfolgt mittels eines zentralen Mikrocomputers 32, der als Auswerteeinrichtung dient. Die Trennelemente 31, 31a und 31b dienen als zentrale Wächter für mehrere Teilleitungen, die von den Hauptleitungen 28, 29 und 30 verzweigen. In den Hauptleitungen können die Strompfade für einen bestimmten Fahrzeugteil, beispielsweise vorne links, vorne rechts, hinten links oder hinten rechts zusammengefasst sein.

Das Trennelement 31 ist ein Wächter für einen Strompfad, in den ein Leistungsschalter 33, z.B. ein Relais für Motoren oder eine Leistungsendstufe, eingeschaltet ist. Aufgabe des Trennelements 31 ist die Kurzschlussvermeidung in den Leitungen oder in den Leitungsendschaltern, die im kritischen Fall zu einer Abschaltung führen. Die Leistungsschalter 33 werden vom Mikrocomputer 32 angesteuert, so dass deren Betriebszustand im Mikrocomputer 32 bekannt ist.

Sobald in der Leitung 28 ein Strom fließt, wird dieser mittels der Messeinrichtung 31' vermessen, und das Messergebnis an den Mikrocomputer 32 weitergeleitet. Im Mikrocomputer 32 wird dieses Messergebnis mit einer zu erwartenden Stromhöhe verglichen, die von der Anzahl der Leistungsschalter 33 abhängt, die der Mikrocomputer 32 in Betrieb gesetzt hat. Weicht das gemessene Stromsignal von dem zu erwartenden Stromsignal ab, so betätigt der Mikrocomputer 32 das Trennelement 31 und schaltet die gesamte Leitung 28 stromlos, um auf diese Weise Beschädigungen an den Leitungen oder an den elektrischen Bauteilen zu vermeiden.

Im mittleren Bildteil von **Fig. 4** ist ein Trennelement 31a einer größeren Anzahl von Polyswitches 34 zugeordnet, die bei Kurzschluss sehr hochohmig werden und dadurch die entsprechenden nachgeordneten Teilleitungen absichern.

Im unteren Bildteil sind Verbraucher 38, 39 und 40 mit vorgeordneten Steuergeräten dargestellt, wobei die verschiedenen Verbraucher stark unterschiedliche Ströme benötigen, die auch zeitlich unterschiedlich lang eingeschaltet werden. Hierbei können die Zuleitungen 38a, 39a und 40a im Querschnitt optimiert werden, da mittels der intelligenten Absicherung durch das Trennelement 31b, das Messglied 31b' und den Mikrocomputer 32 eine intelligente Absicherung gewährleistet ist. Die Signalverarbeitung wird dabei durch ein ASIC 41 unterstützt, welches die z.B. zeitliche Stromauswertung und Abschaltung des Strompfades für die zentrale Auswertschaltung 32 aufbereitet.

## Patentansprüche

1. Kraftfahrzeug mit einem elektrischen Bordnetz, wobei in zumindest einer Leitung ein Sicherungselement zum Schutz der Leitung vor Überströmen vorgesehen ist, und wobei das Sicherungselement aus einem Messglied zur Messung des in der Leitung fließenden Stroms, einem Trennelement zur Unterbrechung der Leitung und einer Auswerteeinrichtung besteht, und wobei bei Funktion des Sicherungselements der vom Messglied gemessene Strom in der Auswerteeinrichtung nach einem Algorithmus ausgewertet wird und in Abhängigkeit des Auswerteergebnisses das Trennelement zur Unterbrechung der Leitung betätigt werden kann,
**dadurch gekennzeichnet,**
**dass** bei der Messung des in der Leitung fließenden Stroms der zeitliche Stromverlauf in einem Zeitintervall Δt gemessen und an die Auswerteeinrichtung weitergeleitet wird, wobei bei der Auswertung in der Auswerteeinrichtung der gemessene zeitliche Stromverlauf als kritischer Belastungszustand oder als unkritischer Belastungszustand klassifiziert wird, und wobei bei einem kritischen Belastungszustand das Trennelement zur Unterbrechung der Leitung betätigt wird.

2. Kraftfahrzeug nach Anspruch 1,
**dadurch gekennzeichnet,**
**dass** die Leitung nach dem Sicherungselement in zumindest zwei Teilleitungen mit jeweils zumindest einem Verbraucher verzweigt, wobei der Auswerteeinheit Daten zur Beschreibung des Betriebszustandes der Verbraucher in den Teilleitungen zugeleitet und diese Daten bei der Auswertung des vom Messglied gemessenen Stroms berücksichtigt werden.

3. Kraftfahrzeug nach Anspruch 2,
**dadurch gekennzeichnet,**
**dass** die Daten zur Beschreibung des Betriebszustandes der Verbraucher (18, 23, 25, 26) in den Teilleitungen über eine Busverbindung (27) an die Auswerteeinrichtung (6) weitergeleitet werden.

4. Kraftfahrzeug nach einem der Ansprüche 1 bis 3,
**dadurch gekennzeichnet,**
**dass** die Auswerteeinrichtung (6) in der Art eines Mikrocomputers oder ASICS ausgebildet ist.

5. Kraftfahrzeug nach einem der Ansprüche 1 bis 4,
**dadurch gekennzeichnet,**
**dass** in die Leitung (1Ob 10c) zu einzelnen Verbrauchern (26a) regenerierbare Sicherungen (21, 22), z.B. Polyswitches, eingeschaltet sind.

6. Kraftfahrzeug nach einem der Ansprüche 1 bis 5,
**dadurch gekennzeichnet,**
**dass** wenigstens in einen Teil der Leitungen (10, 10a) Steuergeräte (25a, 25b) eingeschaltet sind, über die einzelne nachgeschaltete Verbraucher ein- und ausschaltbar sind.

7. Kraftfahrzeug nach Anspruch 6,
**dadurch gekennzeichnet,**
**dass** diese Steuergeräte (25a, 25b) den Schaltzustand der einzelnen Verbraucher (25c, 25a) an die Auswerteeinrichtung (6) rückmelden.

8. Kraftfahrzeug nach Anspruch 7,
**dadurch gekennzeichnet,**
**dass** die Verbindung zwischen der Auswerteeinrichtung (6) und den Steuergeräten (25a, 25b) eine Busverbindung (27) ist.

9. Kraftfahrzeug nach einem der Ansprüche 1 bis 8,
**dadurch gekennzeichnet,**
**dass** die Zahl der Leitungen klein, z.B. ca. 10, ist.

10. Kraftfahrzeug nach einem der Ansprüche 1 bis 9,
**dadurch gekennzeichnet,**
**dass** die Trennelemente wenigstens teilweise Relais (8) sind.

11. Kraftfahrzeug nach Anspruch 10,
**dadurch gekennzeichnet,**
**dass** die Relais (8) wenigstens teilweise bistabile Relais sind.

12. Kraftfahrzeug nach einem der Ansprüche 1 bis 11,
**dadurch gekennzeichnet,**
**dass** die Trennelemente wenigstens teilweise Halbleiterschalter (9) sind.

13. Kraftfahrzeug nach Anspruch 12,
**dadurch gekennzeichnet,**
**dass** die Leitungen mit Halbleiterschaltern (9) zusätzlich durch regenerierbare Sicherungen (12) abgesichert sind.

14. Kraftfahrzeug nach Anspruch 12,
**dadurch gekennzeichnet,**
**dass** Sicherheits- und/oder Diebstahlsicherungssysteme (12, 13) an diese Leitungen angeschaltet sind.

15. Kraftfahrzeug nach einem der Ansprüche 1 bis 14,
**dadurch gekennzeichnet,**
**dass** die Durchschaltung der einzelnen Leitungen in Abhängigkeit vom Fahrzeugzustand und/oder der augenblicklichen Benutzung erfolgt.

16. Kraftfahrzeug nach Anspruch 15,
**dadurch gekennzeichnet,**
**dass** bei der Türöffnung (Türgriffsignale) und/oder Betätigung der Fernbedienung für die Türöffnung nur die Zugangssysteme (Zentralverriegelung und dgl.) eingeschaltet werden.

17. Kraftfahrzeug nach Anspruch 16,
**dadurch gekennzeichnet,**
**dass** die Öffnungssignale direkt der Auswerteeinrichtung (6) zugeführt werden.

18. Kraftfahrzeug nach einem der Ansprüche 1 bis 17,
**dadurch gekennzeichnet,**
**dass** das Ruhestrommanagement durch die Auswerteschaltung (6) erfolgt.

19. Kraftfahrzeug nach einem der Ansprüche 1 bis 18,
**dadurch gekennzeichnet,**
**dass** die Auswerteeinrichtung die Überwachung des Batterieladezustandes (SOC) und des Batteriezustands übernimmt.

20. Kraftfahrzeug nach einem der Ansprüche 1 bis 19,
**dadurch gekennzeichnet,**
**dass** die Auswerteeinrichtung (Mikrocomputer 6) bei Abschalten eines Verbraucherstrangs (10, 10a) einen zugeordneten Diagnosespeicherplatz setzt.

21. Kraftfahrzeug nach einem der Ansprüche 1 bis 20,
**dadurch gekennzeichnet,**
**dass** zusätzlich ein Strommessglied für den Strom von der Batterie zum Verteiler vorgesehen ist.

22. Kraftfahrzeug nach einem der Ansprüche 1 bis 21,
**dadurch gekennzeichnet,**
**dass** nach Abschaltung nach einem erkannten Kurzschluss von Zeit zu Zeit, z.B. bei jedem Neustart, eine Wiederanschaltung des abgeschalteten Versorgungsstrangs erfolgt.

23. Kraftfahrzeug nach Anspruch 22,
**dadurch gekennzeichnet,**
**dass** die Wiederanschaltung nach z.B. dem fünften Mal nicht mehr erfolgt, wenn der Kurzschluss noch besteht.

24. Kraftfahrzeug nach einem der Ansprüche 1 bis 23,
**dadurch gekennzeichnet,**
**dass** für das Fahrzeug mehrere Stromverteiler mit Auswerteeinheiten verwendet werden.

## Claims

1. A motor vehicle with an electrical distribution system, where at least one line is provided with a fuse element to protect the line against overcurrents, and wherein the fuse element consists of a measuring element for measuring the current flowing in the line, a separating element for interrupting the line, and an evaluator, and wherein the current measured by the measuring element with the fuse element functioning is evaluated in the evaluator according to an algorithm, and the separating element can be actuated to interrupt the line, depending on the evaluation result,
**characterized in that**
while measuring the current flowing in the line, the chronological current progression in a specific time interval Δt is measured and relayed to the evaluator, wherein the measured current progression is classified as a critical load state or uncritical load state during evaluation in the evaluator, and wherein the separating element is actuated to interrupt the line given a critical load state.

2. The motor vehicle according to claim 1,
**characterized in that**
the line branches into at least two partial lines after the fuse element with at least one consumer each, wherein the evaluator unit receives data for describing the operating state of the consumers in the partial lines, and these data are taken into account when evaluating the current measured by the measuring element.

3. The motor vehicle according to claim 2,
**characterized in that**
the data for describing the operating state of the consumers (18, 23, 25, 26) in the partial lines are relayed to the evaluator (6) via a bus connection (27).

4. The motor vehicle according to one of claims 1 to 3,
**characterized in that**
the evaluator (6) is designed as a kind of microcomputer or ASIC.

5. The motor vehicle according to one of claims 1 to 4,
**characterized in that**
the line (10b, 10c) incorporates fuses (21, 22), e.g., polyswitches, that can be regenerated to individual consumers (26a).

6. The motor vehicle according to one of claims 1 to 5,
**characterized in that**
at least a part of the lines (10, 10a) incorporates controllers (25a, 25b) with which individual downstream consumers can be activated and deactivated.

7. The motor vehicle according to claim 6,
**characterized in that**
the controllers (25a, 25b) report the switching state of the individual consumers (25c, 25a) to the evaluator (6).

8. The motor vehicle according to claim 7,
**characterized in that**
the connection between the evaluator (6) and the controllers (25a, 25b) is a bus connection (27).

9. The motor vehicle according to one of claims 1 to 8,
**characterized in that**
the number of lines is small, e.g., approx. 10.

10. The motor vehicle according to one of claims 1 to 9,
**characterized in that**
the separating elements consist at least partially of relays (8).

11. The motor vehicle according to claim 10,
**characterized in that**
the relays (8) are at least partially bistable relays.

12. The motor vehicle according to one of claims 1 to 11,
**characterized in that**
the separating elements consist at least partially of semiconductor switches (9).

13. The motor vehicle according to claim 12,
**characterized in that**
the lines with semiconductor switches (9) are additionally protected against short circuits by regeneratable fuses (12).

14. The motor vehicle according to claim 12,
**characterized in that**
safety and/or antitheft systems (12, 13) are connected to these lines.

15. The motor vehicle according to one of claims 1 to 14,
**characterized in that**
the individual lines are enabled as a function of the vehicle state and/or current use.

16. The motor vehicle according to claim 15,
**characterized in that**
only the access systems (central locking and the like) are activated when opening the door (door handle signals) and/or actuating the remote control for opening the door.

17. The motor vehicle according to claim 16,
**characterized in that**
the opening signals are relayed directly to the evaluator (6).

18. The motor vehicle according to one of claims 1 to 17,
**characterized in that**
closed-circuit current management takes place via the evaluator circuit (6).

19. The motor vehicle according to one of claims 1 to 18,
**characterized in that**
the evaluator monitors the battery charge state (SOC) and the battery state.

20. The motor vehicle according to one of claims 1 to 19,
**characterized in that**
the evaluator (microcomputer 6) sets up an allocated diagnostic memory location when a consumer branch (10, 10a) is deactivated.

21. The motor vehicle according to one of claims 1 to 20,
**characterized in that**
a current measuring element is additionally provided for the current from the battery to the distributor.

22. The motor vehicle according to one of claims 1 to 21,
**characterized in that**
the deactivated supply branch is switched back on upon deactivation after a recognized short circuit from time to time, e.g., during any restart.

23. The motor vehicle according to claim 22,
**characterized in that**
the reactivation does not take place, e.g., after the fifth time, if the short circuit persists.

24. The motor vehicle according to one of claims 1 to 23,
**characterized in that**
several current distributors with evaluator units are used for the vehicle.

## Revendications

1. Véhicule avec un réseau de bord électrique pour lequel est prévu dans au moins un circuit un élément formant fusible pour protéger le circuit contre les surintensités de courant et pour lequel l'élément formant fusible est composé d'un élément de mesure pour mesurer le courant passant dans le circuit, d'un élément de sectionnement pour interrompre le circuit et d'un dispositif d'évaluation et pour lequel lors du fonctionnement de l'élément formant fusible, le courant mesuré par l'élément de mesure est évalué dans le dispositif d'évaluation selon un algorithme et l'élément de sectionnement peut être actionné pour interrompre le circuit en fonction du résultat d'évaluation,
**caractérisé en ce que**
lors de la mesure du courant passant dans le circuit la caractéristique temporelle du courant est mesurée dans un intervalle de temps Δt et est transmise au dispositif d'évaluation, pour lequel lors de l'évaluation dans le dispositif d'évaluation la caractéristique temporelle du courant mesurée est classée comme état de charge critique ou comme état de charge non critique et pour lequel l'élément de sectionnement est actionné pour interrompre le circuit à un état de charge critique.

2. Véhicule selon la revendication 1,
**caractérisé en ce que**
le circuit se ramifie après l'élément formant fusible en au moins deux circuits partiels avec respectivement au moins un consommateur, pour lequel des données sont transmises dans les lignes partielles à l'unité d'évaluation pour décrire l'état de fonctionnement des consommateurs et pour lequel ces données sont prises en considération lors de l'évaluation du courant mesuré par l'élément de mesure.

3. Véhicule selon la revendication 2,
**caractérisé en ce que**
les données sont transmises dans les circuits partiels par une liaison de bus (27) au dispositif d'évaluation (6) afin de décrire l'état de fonctionnement des consommateurs (18, 23, 25, 26).

4. Véhicule selon une des revendications 1 à 3,
**caractérisé en ce que**
le dispositif d'évaluation (6) est conçu dans le style d'un micro-ordinateur ou d'un circuit intégré spécifique (ASIC).

5. Véhicule selon une des revendications 1 à 4,
**caractérisé en ce que**
dans le circuit (10b, 10c) des coupe-circuits régénérables (21, 22), par exemple des fusibles autoréarmables, sont connectés pour chaque consommateur (26a).

6. Véhicule selon une des revendications 1 à 5,
**caractérisé en ce qu'**
au moins dans une partie des circuits (10, 10a) sont branchés des appareils de commande (25a, 25b) au moyen desquels des consommateurs individuels connectés en aval peuvent être connectés et déconnectés.

7. Véhicule selon la revendication 6,
**caractérisé en ce que**
ces appareils de commande (25a, 25b) signalent en retour l'état de connexion de chaque consommateur (25c, 25a) au dispositif d'évaluation (6).

8. Véhicule selon la revendication 7,
**caractérisé en ce que**
la liaison entre le dispositif d'évaluation (6) et les appareils de commande (25a, 25b) est une liaison par bus (27).

9. Véhicule selon une des revendications 1 à 8,
**caractérisé en ce que**
le nombre de circuits est faible, par exemple environ 10.

10. Véhicule selon une des revendications 1 à 9,
**caractérisé en ce que**
les éléments de sectionnement sont au moins en partie des relais (8).

11. Véhicule selon la revendication 10,
**caractérisé en ce que**
les relais (8) sont au moins en partie des relais bistables.

12. Véhicule selon une des revendications 1 à 11,
**caractérisé en ce que**
les éléments de sectionnement sont au moins en partie des contacteurs à semi-conducteurs (9).

13. Véhicule selon la revendication 12,
**caractérisé en ce que**
les circuits avec contacteurs à semi-conducteurs (9) peuvent être en plus protégés au moyen de fusibles régénérables (12).

14. Véhicule selon la revendication 12,
**caractérisé en ce que**
des systèmes de sécurité et/ou antivol (12, 13) sont branchés à ces circuits.

15. Véhicule selon une des revendications 1 à 14,
**caractérisé en ce que**
la connexion de chaque circuit a lieu en fonction de l'état du véhicule et/ou de l'utilisation momentanée.

16. Véhicule selon la revendication 15,
**caractérisé en ce que**
lors de l'ouverture des portes (signaux de poignée de porte) et/ou de l'actionnement de la télécommande d'ouverture des portes, seuls sont mis en circuit les systèmes d'accès (verrouillage central et autres systèmes de ce genre).

17. Véhicule selon la revendication 16,
**caractérisé en ce que**
les signaux d'ouverture sont directement transmis au dispositif d'évaluation (6).

18. Véhicule selon une des revendications 1 à 17,
**caractérisé en ce que**
la gestion du courant de repos a lieu au moyen du circuit d'évaluation (6).

19. Véhicule selon une des revendications 1 à 18,
**caractérisé en ce que**
le dispositif d'évaluation prend en charge la surveillance de l'état de charge de la batterie (SOC)et de l'état de la batterie.

20. Véhicule selon une des revendications 1 à 19,
**caractérisé en ce que**
le dispositif d'évaluation (micro-ordinateur 6) établit, lors de la déconnexion d'un tronçon de consommateur (10, 10a), un emplacement de mémoire de diagnostic attribué.

21. Véhicule selon une des revendications 1 à 20,
**caractérisé en ce qu'**
un élément de mesure de courant est prévu en plus pour le courant allant de la batterie au distributeur.

22. Véhicule selon une des revendications 1 à 21,
**caractérisé en ce qu'**
après déconnexion après un court-circuit identifié a lieu de temps en temps, par exemple à chaque nouvelle mise en marche, une reconnexion du tronçon d'alimentation déconnecté.

23. Véhicule selon la revendication 22,
**caractérisé en ce que**
la reconnexion n'a plus lieu par exemple après la cinquième fois, si le court-circuit existe encore.

24. Véhicule selon une des revendications 1 à 23,
**caractérisé en ce que**
pour le véhicule plusieurs distributeurs de courant avec unités d'exploitation sont utilisés.
